# EUROPEAN PATENT APPLICATION

(11) **EP 1 914 916 A1**
(43) Date of publication of application: **23.04.2008**
(21) Application number: 06425728.0
(22) Date of filing: 20.10.2006
(51) Int. Cl.: H04J 3/16, H04Q 11/04

(54) **Method for transporting multiplexed PCM flows and ethernet packets in a synchronous aggregate flow**

(71) Applicant: Siemens S.p.A., 20126 Milano (IT)
(72) Inventor: Lonati, Enrico, 20010 Arluno (MI) (IT); Perrina, Gianluca, 29100 Piacenza (IT)

(57) **Abstract**

A method is disclosed for transporting Ethernet packets and multiplexed tributary E1 flows into an aggregate octet-synchronous flow transmitted on a transport medium freely selectable between: radio, cable, or optical fibres. The transmitting interface executes the following steps: a) a plurality of plesiochronous tributary PCM flows are received and octet-synchronized using a common clock; b) the synchronized tributary flows are multiplexed into a an aggregate flow subdivided in time frames associated to a matrix of bytes divisible in a fixed number of rows and columns, wherein every tributary octets are mapped by columns, and the matrix is scanned row-by-row and bit-by-bit; c) variable-length packet data are received from at least a source and stored in a buffer; d) the buffered packet data is divided in segments 32-byte long; e) 2-byte overhead is added up to every segment; f) every segment completed with overhead is mapped into one or more sequential rows of said matrix, in such manner that all mapped segments are located inside a space between at least two columns of the matrix; g) the aggregated flow including multiplexed tributary flows and segmented packet data plus overhead is transmitted, by scanning the associated matrix. Dual operations including reassembly are performed by the receiver interface (fig.4A).

## Description

### FIELD OF THE INVENTION

The present invention relates to the field of transport networks, and more precisely to a method for transporting multiplexed PCM flows and Ethernet packets in a synchronous aggregate flow. More in general, the invention is also applicable to the most common types of packet data.

### BACKGROUND ART

ITU-T Recommendation G.7041/Y.1303 (2005) defines a generic framing procedure (GFP) to delineate octet-aligned, variable-length payloads from higher-level client signals for subsequent mapping into octet-synchronous paths such as those defined in ITU-T G.707 and G.709. GFP provides a generic mechanism to adapt traffic from higher-layer client signals over a transport network. Client signals may be PDU-oriented, such as IP/PPP or Ethernet MAC, or block-code oriented constant bit rate stream (such as Fibre Channel). Packets are transmitted as a whole with GFP, to say, without segmentation and successive reassemble. GFP is not concerned with mapping its frames into Plesiochronous links described in ITU-T Recommendation G.703 and G704 for E1 2.048 Mbit/s and the higher level multiples, probably the reason is the lack of an adequate transport structure in the frames, e.g. like the Virtual Container (VCs-n) used in the SDH frames.

Some devices are available in commerce for converting IEEE 802.3 Ethernet packets into ITU-T G.703-G.704 frames for transmission over the existing PCM (Pulse Code Modulation) links, and then reconverting the G.703-G.704 format with Ethernet data content back to original Ethernet packets at the remote terminals. These devices provide a bridge between two Ethernet LANs over the existing E1-based Telecom networks simply mapping IEEE 802.3 bytes into PCM octets, without a strategy to transmit both of them together over a synchronous link optimized for the joined payloads. These bridging devices are not concerned with a segmentation and reassemble, as this technique is really intended in the art.

WO 2004/049179-A2 discloses a method and apparatus for intermediate buffer segmentation and reassembly. The method comprises the steps of receiving a stream of packet data from a communication link; storing the received packet data in a buffer unit; transmitting a burst of the stored packet data to a memory unit, wherein the size of packet data depends on the properties of the computer data bus that interconnects the buffer unit to the memory unit. Dual considerations apply for transmitting outgoing packet data from the memory unit to the buffer unit, and then to the communication link. The properties of the computer data bus only depend on the properties of the on-adapter memory used for buffer unit. Usually, 256 or 512 byte blocks of data constituted optimized transfers made possible with DRAM and logic-on-chip buffer implementation up to the priority date. Segmentation and reassembly was used by the cited invention exclusively to optimize internal bus cycles, independently of the characteristics and requirements of communication links. The latter only included fixed or variable length packet data payloads, and not a mixed traffic of synchronous PCM signals and variable length packet data, as the relevant context of the present invention. Segmentation and reassembly according to the teaching of the citation should work improperly with packet data bytes mixed with PCM octets, failing in reassembling data with sensible meaning.

EP 1094641 B1 discloses a method and apparatus for segmentation and reassembly of data packets in a communication switch, in order to reduce latency and large buffer requirements of the older prior art segmentation and forwarding systems, by which portions of packets are buffered until the entire packet has been received before any forwarding of the packet to the destination line card/s begins. The method begins by receiving a packet which includes fields (e.g. packet destination, packet source, interface, etc.) that determine forwarding parameters. As the packet is being received, segmentation cells are created from portions of the packet received, wherein each segmentation cell is provided to a switching fabric as soon as creation of the segmentation cell is completed. It only concerns ATM/SONET based links and ATM/SONET switching fabrics Also in this case the segmentation and reassembly method addresses a different problem in respect of how obtaining a mixed traffic of synchronous PCM signals and variable length packet, as in the present invention.

### SUMMARY AND ADVANTAGES OF THE INVENTION

In view of the state of the art described, it is an object of the present invention to provide a method for transporting variable-length packet data into octet-synchronous flows, including the following steps executed by a transmission interface:
- receiving plesiochronous tributary PCM flows and synchronizing their octets with a common clock ;
- receiving variable-length packet data and storing them in a buffer;
- multiplexing the tributary octets in an aggregate flow subdivided in time frames describable by a matrix of bytes with fixed numbers of rows and columns, scanned by rows and with every tributary octets mapped by columns;
- dividing the buffered packet data in segments with fixed length of bytes;
- adding up to each segment an overhead with fixed length of bytes;
- mapping every segment completed with overhead into one or more sequential rows of said matrix in such manner that all mapped segments are located inside a space between at least two columns;
- transmitting onto a transport medium the aggregate flow including said multiplexed tributary flows and segmented packet data, as disclosed in claim 1.

According to the method of the invention, the aggregate flow transmitted onto the transport medium is received at a remote end, wherein dual operations are executed by a receiving interface to obtain tributary PCM flows and packet data frames, as originally transmitted.

Profitably, packet data are included in Ethernet frames.

Additional features of the present invention which are believed to be novel are set forth with particularity in the appended claims.

According to the method of the invention, the number of sequential columns subtracted form the total and assigned to convey Ethernet traffic is scheduled at MAC level. Also the sequential positions of columns assigned to the Ethernet traffic is scheduled at MAC level. The final aggregate flux exploits again the reference frame of native aggregate PCM bus, for example the so-called AX Bus used in the Applicant's transport networks, but differently from it, the composition of the associated matrix is changed to host the mixed traffic. In the new matrix there are groups of columns used to convey segments of packet data mapped by rows, nearby group of columns used to convey tributaries mapped by columns. The double fashion mapping allows to optimized joined payloads.

According to the method of the invention, 2-byte overhead is appended to every segment 32-byte long, this allows a good trade-off between simplicity on the realization and maximization of the transported payload. The total length of 34 bytes is equal to the length of a column occupied by a tributary, in such a way that each segment can exactly take out the number of octets assignable to a tributary, making the transport bus transparent to the informative content. Besides 34-byte segments allow to fill-up the assignable space (4,352 bytes) completely, being 34 a submultiple of it. Profitably, the short segments meet the requirements of VoIP (Voice over IP) using packet data connectionless transmissions for emulating circuit-switched calls.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **figures 1** and **2** indicate a matrix representing a TDMA frame of a (Time Division Multiplex Access) transmission bus used for transporting multiplexed type-E1 tributary flows between radio equipments produced by the Applicant;
- **fig.3** indicates the fragmented structure of an Ethernet packet data (frame) arranged to be inserted in the TDMA transmission frame of fig.1, according to the method of the present invention;
- **figures 4A and 4B** indicate two TDMA transmission frames obtained by the method of the present invention;
- **fig.5** indicates the general block diagram of a baseband transmission interface operating according to the method of the invention;
- **fig.6** indicates the general block diagram of a baseband receiving interface operating according to the method of the invention;
- **fig.7** indicates the general block diagram of the transmission process carried out by the transmission interface of fig.5;
- **fig.8** indicates the general block diagram of the reception process carried out by receiving interface of fig.6;
- **fig.9** indicates the flow chart of the segmentation process executed inside a block of the transmission process diagram of fig.7;
- **figures 10A** and **10B** indicate the flow chart of the reassembly process executed inside a block of the reception process diagram of fig.8.

### DETAILED DESCRIPTION OF AN EMBODIMENT OF THE INVENTION

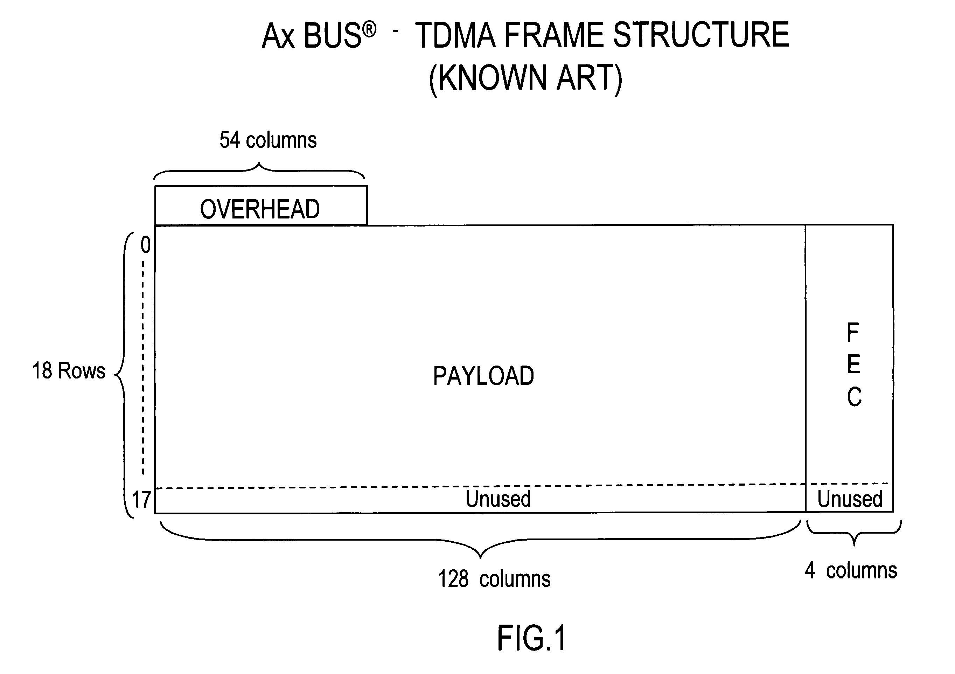

In **fig.1** we see the very general layout of a matrix associated to time structure of the so-called AX bus® implemented in SRAL (Siemens Radio Access Low capacity) XD (Extra Density) equipment manufactured by the Applicant, before the present invention was conceived. The AX bus is a high throughput (155,520 Mbit/s) octet-synchronized serial link appositely designed to connect Access Board with Base Band boards in order to transport 64xE1 tributary flows. With reference to **fig.1** the depicted matrix is composed of three main areas repeated every 125 µs: Overhead; Payload; Forward Error Correction (FEC). Overhead contains 54 bytes, payload 2,304 octets/bytes, and FEC 72 bytes. Therefore, the frame structure depicted in the figure is formed by 2,430 bytes (128 of which are unused) repeated every 125 µs, for a resulting bit-rate of 155,520 kbit/s. The payload bit rate is equal to 147,456 kbits/s and the overhead rate is 3,456 kbits/s. The AX bus interface's frame aims to support different kind of tributaries such as E1 (2.048 kbit/s), T1 (1.544 kbits/s), E3 (34,368 kbit/s), T3 (44,736 kbits/s).

Overhead is formed by 54 bytes as detailed in the following: Alignment Words (2 bytes); Link Identifier Code (1 byte); Overhead Type (2 bytes); Load Type (4 bytes); Frame Number (1 byte); Spare (3 bytes); Micro Channel (8 bytes for: 64, 128, 192, 256, and 512 kbit/s); Cyclic Redundancy Code (4 bytes); To Be Defined (TBD) (7 bytes); Radio Frame Number (1 byte); Radio Link Identifier Code (1 byte); Info (4 bytes); User Channels (5 bytes); Forward Error Correction (4 bytes).

The payload takes up 2,304 bytes that are shared out over 18 rows per 128 columns. At the end of each row there are four bytes of FEC code. The AX bus interface shall be able to carry a variable payload between access boards and baseband boards with a granularity of 64 kbit/s (8 bytes per frame). When the payload length is lower than the maximum allowed value, the unused bytes must be filled with "FF" hexadecimal padding values.

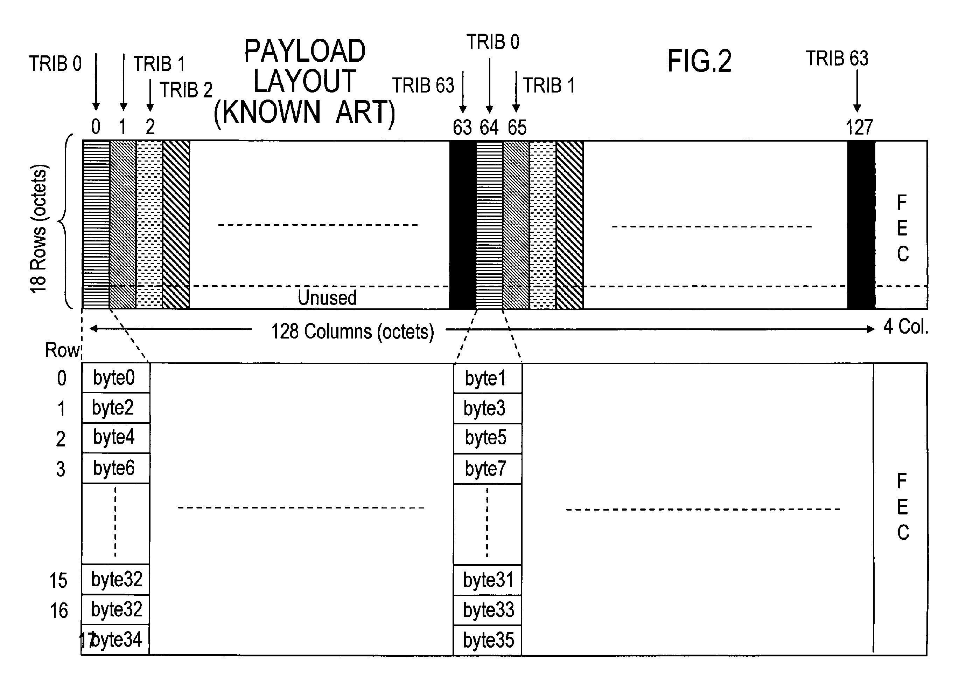

With reference to **fig.2,** every 125 µs of the aggregate serial flow the overhead is transmitted at first, then rows are transmitted sequentially row-by-row and bit-by-bit from left to right. Up to 64 different E1 channels can be transported at the same time, 36 bytes (2x18 rows) are reserved for each E1 channel, but only 34 bytes are effectively used (32 bytes of native E1 tributary plus 2 bytes for alarms and bit stuffing/de-stuffing on the aggregate flow). Bytes of the same E1 tributary are inserted in two columns spaced of 64 columns, that is tributary N will be inserted in columns N and N+64. Similarly, all tributaries are mapped along the columns of the frame structure. The insertion of the 2 Mbit/s tributary signals in the aggregate frame is obtained with the positive/negative justification method. Each 2,048 kbit/s tributary signal can be mapped into a 2,304 kbit/s signal, synchronous with the aggregate bit rate. Similar concepts are used to convey four E3 multiplied fluxes in the AX bus.

The illustration of the background context is terminated and from now on the invention will be described with the help of the remaining figures. Accordingly, the structure of the AX bus is adapted to carry out Ethernet traffic and E1/E3 PCM traffic together; the overall MAC scheduling process makes use of fairness to share the time structure between two types of traffic.

The Ethernet (IEEE 802.3) traffic is constituted by variable length frames in the range from 64 to 1,522 bytes, including VLAN tag (Virtual Local Area Network). Clock used to transmit Ethernet frames is generally different from clock used to time the AX bus, so a preliminary rate adaptation and synchronization are needed in order to convey the latter into synchronous TDMA frames of the aggregate flow. Furthermore, once the space appointed to the Ethernet traffic into TDMA frames has been scheduled at the highest MAC level, a problem arises of how filling up this space at best. Due to both the variable length of the Ethernet frames and the variable amount of the assigned space, segmentation and successive reassembly of Ethernet frames is unavoidable. Without limitation for the generality of the invention, considering: a) the particular structure of the AX bus; b) the minimum 64 bytes length of Ethernet frames, c) overhead requested for addressing the segmentation/reassembly process, a subdivision of the TDMA frames into segments of 34 bytes, 2 bytes for overhead and 32 bytes for Ethernet payload, has been found very profitable. In fact, being 34 bytes the number of bytes of each tributary, it is easier to replace a tributary contribution with a whole Ethernet segment. Disregarding the unused 128-bytes of last row in the table, 34-byte segments allow to fill-up the assignable space (2,176 bytes) completely, being 34 a submultiple (64^{th}) of it.

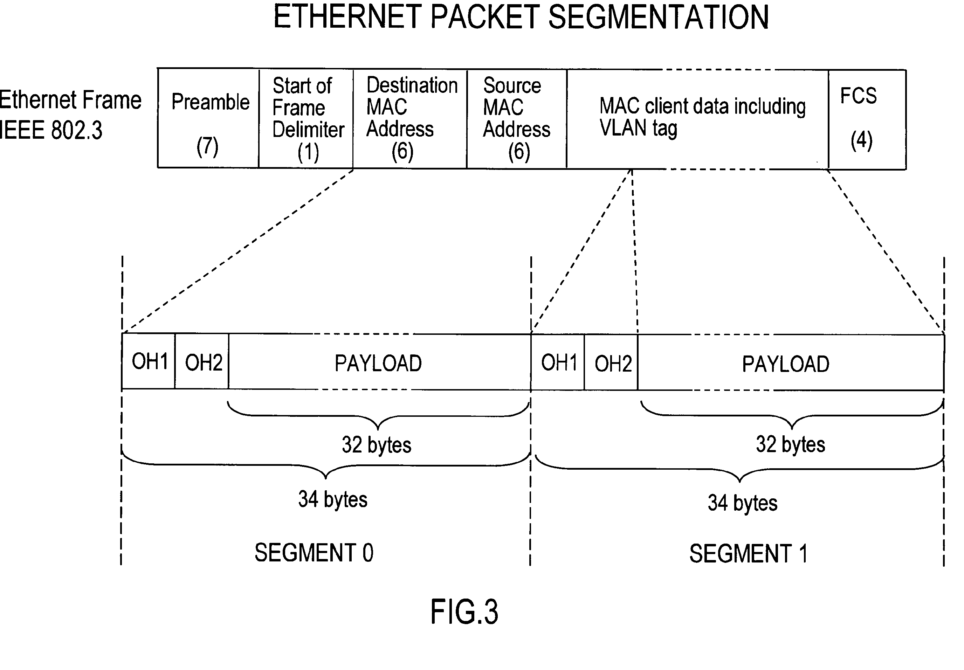

With reference to **fig.3**, in the upper part we see an Ethernet frame subdivided as the indicated fields. Preamble, Start of Frame Delimiter, and FCS fields are discarded from the received frames, while the other fields: MAC Address destination, MAC Address source, and MAC Client data payload including VLAN tag are segmented as previously said. As far as the FCS field is concerned, it is removed by the Ethernet MAC and then recalculated during the reception process after the whole Ethernet frame has been reassembled, for this reason it is never part of the payload. The segmentation process, is performed in two successive steps: first of all the actual Ethernet frame enters an incoming buffer memory of the FIFO (First In First Out) type long at least the maximum length of the Ethernet frame (1,522 bytes). Subsequently, the stored frame is extracted from the FIFO buffer in 32-byte segment length. At each extraction 2 overhead bytes OH1 and OH2 are inserted at the beginning of the segment including the payload. For payload is intended all undiscarded fields of the received Ethernet frame. Bytes OH1 and OH2 include information needed to the reassembly process. The following tables report the Information Elements (IE) included in the overhead bytes:

**TABLE 1: OH1's Information Elements**

| **Byte OH1** | | |
|---|---|---|
| Bit Name | Bit | Purpose and activity |
| Segment Type | 7-6 | "00": first segment; "01": middle segment; "10": last |
| Sequence Counter | 5-0 | Counts the segment number |

**TABLE 2: OH2's Information Elements**

| **Byte OH2** | | |
|---|---|---|
| Bit Name | Bit | Purpose and activity |
| | 7-5 | Not used (but assignable to address different segment sources) |
| Last segment valid bytes | 4-0 | Number of valid bytes in the last segment ("00000" means 32 bytes valid |

Once an Ethernet frame is subdivided in packets of 34 bytes, they are mapped along the rows of the AX bus. The number of usable columns (in couples) is programmable, each couple of columns associated to the same E1 flow includes 34 bytes, as a consequence, an amount of Ethernet traffic integer multiple of E1 can be mapped (in the specific case fro 0 to 64 E1 equivalent). The structure of the Ethernet frame depicted in **fig.3** is typical in communications protocols based on frames with variable length, that can be segmented and reassembled accordingly.

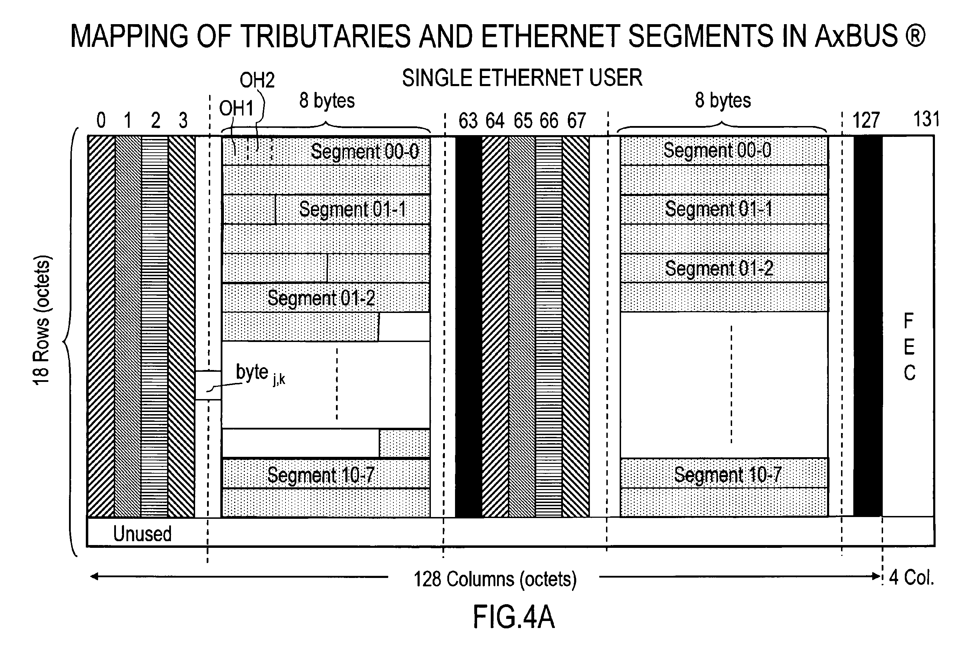

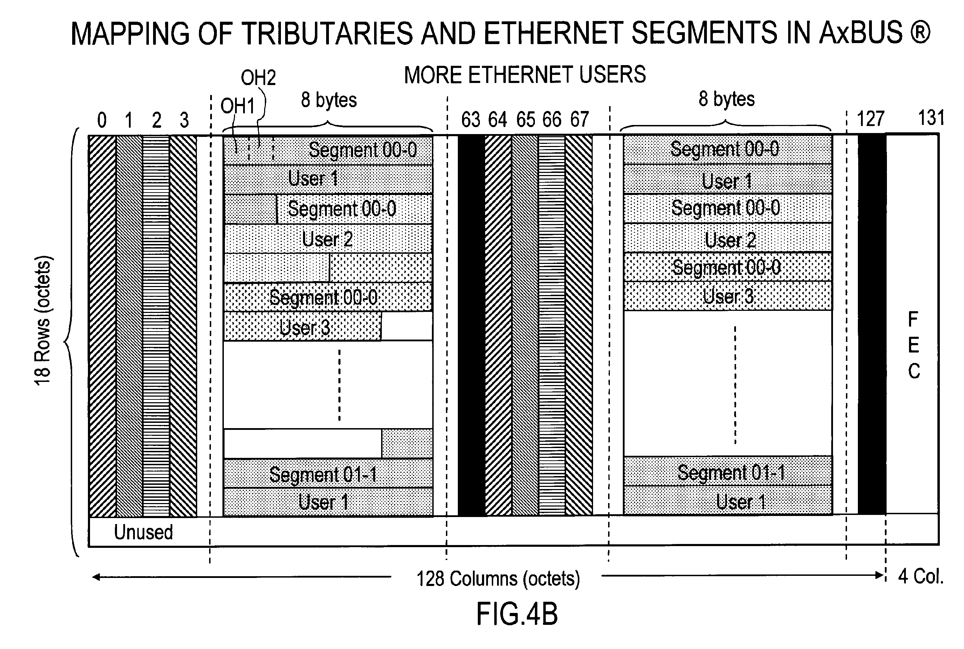

**Figures 4A** and **4B** show two examples of mapping Ethernet segments in an aggregate TDMA frame. In **fig.4A** sequential Ethernet segments are referred to a single user, while in **fig.4B** they are referred to more than one users. These figures show a respective matrix associated to the aggregate flux. As known, a matrix is a table of elements (bytes) each one being addressable by a couple of integer values assumed by two positional indexes (j,k) respectively associated to the rows and the columns. Each element is located at the cross point between a row and a column. In the depicted tables each E1 flow has constant column index value and variable row index value. Without limitation, each segment is subdivided in two parts respectively included in the first and the second 64-bytes part of every row. The location of each segment in the matrix reflects the fields "Segment Type" and "Sequence Counter" of the OH1 byte indicated in **TABLE 1**. Up to 8 different users are addressable by using the three unused bits of OH2. Differently from E1 tributaries that are mapped by columns, the Ethernet frames are mapped to go along the rows in agreement with the transmission mode of a TDMA aggregate frame. Mapping along columns, also conceptually possible, is more complicated and does not produce any advantage. In the most general case every segment 34-byte long can be mapped without interruption in a row or broken in two ore more tracts interleaved by columns mapped in a single row or in sequential rows. Number and length of each tract being the same for all segments and corresponding tracts in all mapped segments are delimited by the same columns. The 4-byte FEC at the end of each row accounts for all bytes of the row independently of their contents. The TBD (7 bytes) and/or Spare (3 bytes) of the header can be used to give indication on the type of mapping used in the matrix, for example, length and starting position (column index) of each tract all segment are broken into and optionally the number of conveyed sources.

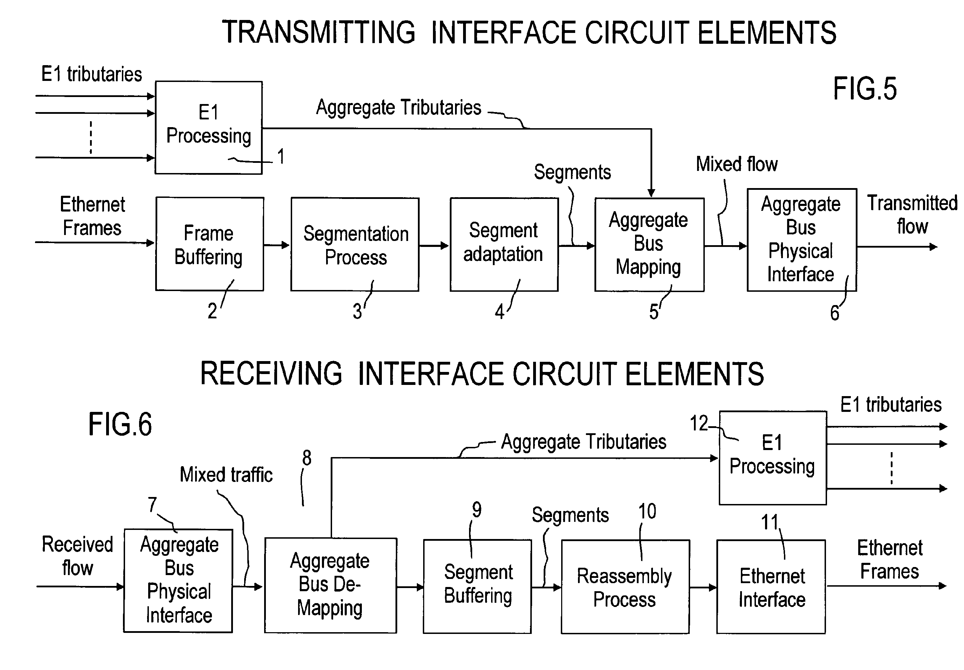

With reference to **fig.5**, the baseband transmission interface includes two front-end blocks 1 (E1 Processing) and 2 (Frame Buffering) for receiving E1 tributary digital flows and Ethernet frames, respectively. Block 1 is placed upstream a chain of the following blocks: 3 (Segmentation Process), 4 (Segment adaptation), 5 (Aggregate Bus Mapping), and 6 (Aggregate Bus Physical Interface). The latter outputs serial data transmitted on the used communication medium. Block 5 has another input for receiving the signal sent out from block 1.

Before illustrating all operations, some considerations are worth about the role of the transmitting interface and MAC protocol layer running on it. Two types of interfaces are considered, a first one belonging to a terminal station able to collect traffic from various sources and also generating its own traffic, a second one belonging to an intermediate relay node without traffic chance capacity. A transmitting interface of the first type, on the basis of received transmission requests from the various sources and traffic load status information concerning the available resources, schedules the amount of transport resources to be assigned to PCM (E1/T1) tributaries and to packet data transmission inside each shared aggregate flow. After which the configuration of the transmission frame is planned and the various blocks initialized accordingly. Planning, intended as the assignment layout of that matrix associated to the time frame, is adapted at MAC time and the layout configuration is signalled to the relay stations, so as to initialize their internal circuits accordingly.

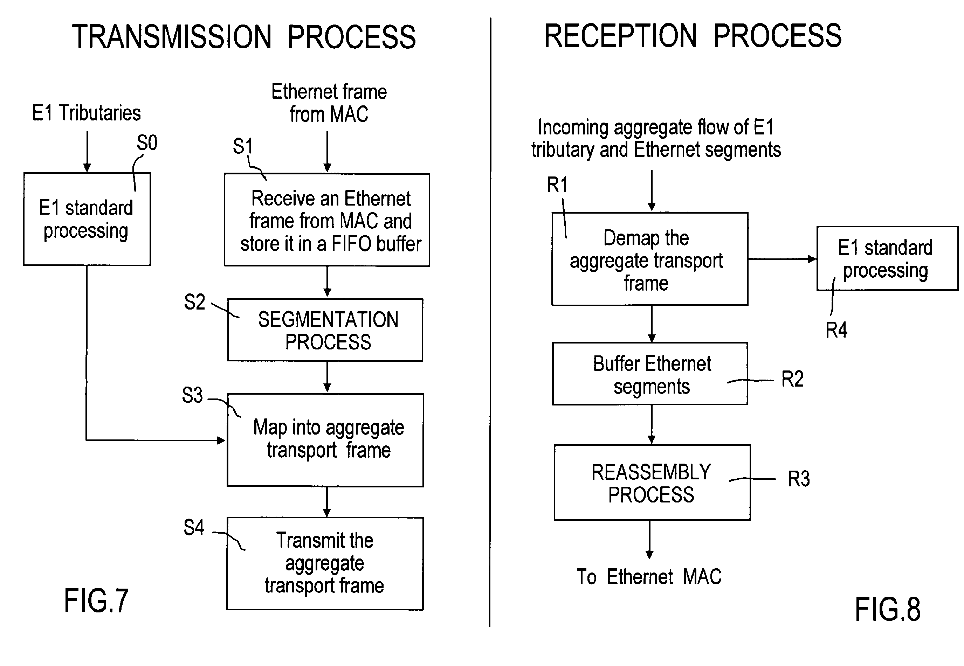

In operation, block 1 carries out all the operations known from the IEEE G.703, G.704 specifications concerning: E1 tributary physical interface, bit stuffing insertion, operation and maintenance, aggregation of E1 tributary flows in single aggregate flow. Block 2 receives every incoming Ethernet frame from a given number of scheduled users and stores the user frames into respective FIFO buffer memories, having individual capacity at least equal to the maximum possible length of the Ethernet frame (1522 bytes). Block 3 performs the segmentation process that will be described with the help of **fig.7**. Block 4 adapts the processing rate of Ethernet segments to the common clock of the aggregate bus (155,520 kbit/s). Block 5 builds up a matrix similar to the one visible in **fig.4A**, or **fig.4B**, but this is not a limitation as these formats only depend on the particular structure of the AX Bus and other formats are possible. At the output of block 5 a flow of bits obtained by sequential transmission of every frame by-row is present, the flow includes mixed traffic organized as specified in the matrix associated to the frames. Block 6 performs typical operations for interfacing the mixed-traffic baseband flow to the selected medium, e.g. radio, cable, optical fibres, so block 6 is application dependent. The whole processing shall be completed before the 125 µs time frame is expired, introducing a frame delay only. The hardware of the interface is based on ASIC (Application Specific Integrated Circuit) devices including the needed logic to operate in parallel to the other devices. A microprocessor is programmed to execute traffic planning and resource scheduling, at MAC level, plus supervision, diagnostic, maintenance routines, and signalling to interconnected interfaces. A very stable clock generator is equipped to derive all requested time signals. The high bit-rate of aggregate flow at the output of block 5 is transmitted on a bus implemented according to the following specification: Electrical Characteristics of Low Voltage Differential Signalling (LVDS) Interface Circuits, ANSI/TIA/EIA-644, American National Standards Institute/Telecommunications Industry/Electronic Industries Association, October 1995. LVDS is a known technology addressing the needs of high data rates with significantly less power consuming than competing technologies.

With reference to **fig.6**, the baseband receiving interface includes a front-end block 7 (Aggregate Bus RX Physical Interface) for receiving from the selected communication medium a flow having the transport characteristics of the transmitted one. Block 7 is placed upstream a chain including the following blocks: 8 (Aggregate Bus De-Mapping), 9 (Segment Buffering), 10 (Reassembly Process), and 11 (Ethernet Interface), The last block outputs the Ethernet frames transmitted. Block 8 has another output connected to the input of a block 12 (E1 Processing); the latter outputs the E1 tributary digital flows transmitted.

The receiving interface is initialized with the same layout (configuration) of PCM tributaries as the transmitting interface, but the configuration of Ethernet segments is free to be changed especially when more than one user is involved. In operation, block 7 performs typical interface operations for coupling to the selected medium and receive the incoming flow in optimal fashion, with that block 7 is application dependent. Block 8 receives the mixed traffic flow demaps Ethernet segments completed with overhead, and directs E1 tributary flows to block 12. The latter extracts the single E1 tributary flows and for every one performs bit stuffing removing and other typical physical interface operations for delivering all E1 tributary flows. Block 9 buffers the incoming Ethernet segments and decouples the incoming segment rate from the rate of reassembly process. The cascaded block 10 performs a reassembly process, that will be described with the help of **fig.8**, for rebuilding the whole Ethernet frame. Block 11 executes all typical physical interface operations for delivering Ethernet frames correctly at the access point. Hardware realization of the receiving interface is based on dual concepts as the ones illustrated for the transmitting interface.

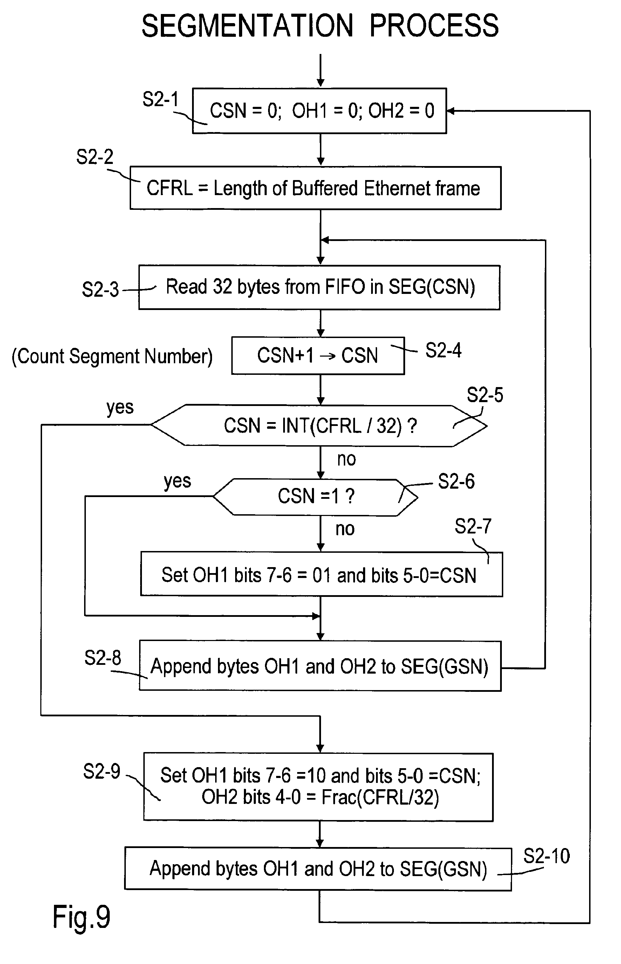

The operation of the transmission interface is resumed in a block diagram of the transmission process visible in **fig.7.** With reference to the figure, the two steps S0 and S1 are carried out in parallel for receiving baseband E1 tributary flows and Ethernet frames and synchronize both of them to the reference clock used in the interface. In step S0 the tributary flows undergone the standard time processing described in the relevant IEEE G.703 and G.704 specifications for plesiochronous flows. The successive steps are referred to the Ethernet frames relevant to a single user. In step S1 the actual variable-length Ethernet frame delivered by the baseband processing is stored in a FIFO buffer for successive segmentation. The Ethernet frame includes a "Start of frame delimiter" and a "Length type" fields that allow monitoring the position of the frame in the buffer and storing the value of its length. In step S2 the SEGMENTATION PROCESS is carried out on the stored Ethernet frame. This step will be detailed in fig.9. The segmentation process obtains segments of the original Ethernet frame with the overhead useful for reassembling them by the receiver. The successive step S3 is dedicated to map the Ethernet segments into the aggregate PCM frame, obtaining a structure similar to the ones shown in **figures 4A** and **4B**. Finally, the aggregate frame is transmitted in step S4.

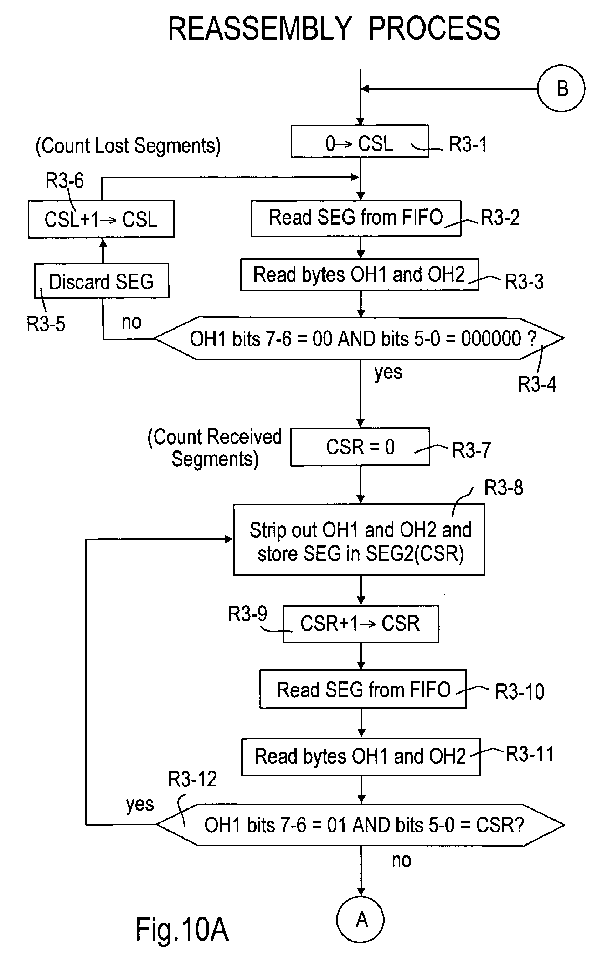

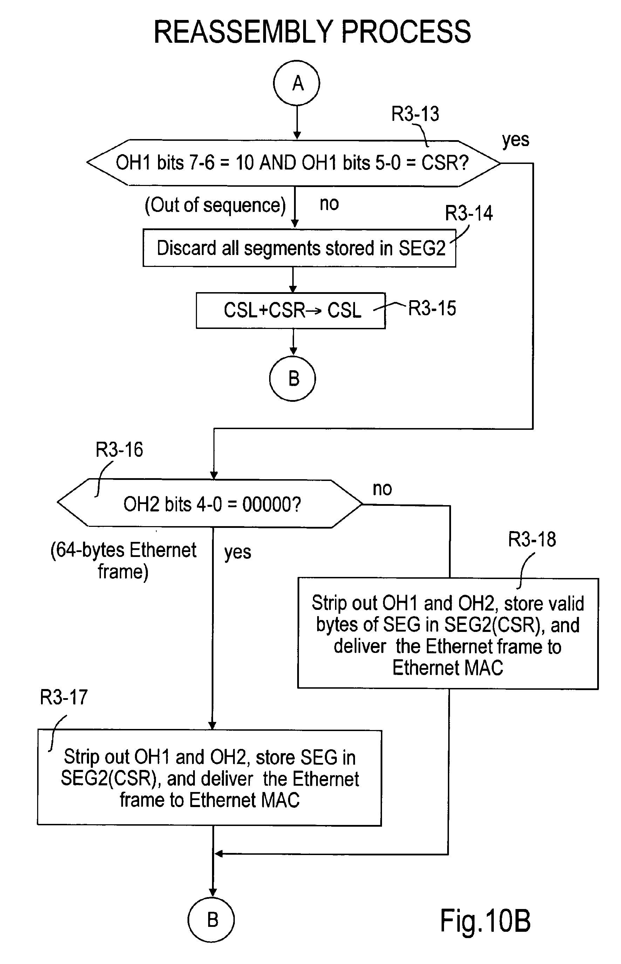

The operation of the receiving interface is resumed in a block diagram of the reception process visible in **fig.8**. With reference to the figure, an aggregate transport frame having a structure similar to the ones shown in **figures 4A** and **4B**, is received at the physical interface. In step R1 the aggregate frame is demapped for separating the Ethernet segments from aggregate E1 flows. Ethernet segments are buffered in step R2 and in successive step R3 the REASSEMBLY PROCESS is executed. This process will be detailed in figures 10A and 10B. A the output of the reassembly process the Ethernet frame is delivered to the Ethernet MAC. Returning the attention to step R1, in another successive step R4 parallel to R2 the demapped aggregate E1 flows are delivered to the PCM interface for standard processing.

With reference to **fig.9**, the segmentation process starts with the initialization step S2-1, where a counter CSN of the number of 32-byte segments to be read from the buffer and the header bytes OH1 and OH2 are zeroed. In step S2-2 the length of the frame is stored in a register CFRL. A segmentation cycle (steps S2-3 - S2-8) is started in step S2-3 by reading 32 sequential bytes constituting a segment from the buffer. The segment is associated to the counter CSN incremented by one in step S2-4. In step S2-5 the arrival of the last segment is checked; if the incoming segment is not the last it is further checked in step S2-6 the presence of the first segment in order to skip the successive step S2-7 going to step S2-8 directly for appending the overhead bytes OH1 and OH2 (zeroed in the first passage) to the first segment. If the result of two sequential interrogation steps S2-5 and S2-6 addresses a middle segment, step S2-7 is executed to append the proper content of the OH1 byte to the segment read from the buffer. If the last segment results by the interrogation step S2-5, the two steps S2-9 and S2-10 are executed to set the foreseen contents of the overhead bytes OH1 and OH2 and append them to the last segment. After which the array SEG(GSN) is delivered to the mapping process and the segmentation is repeated with another frame lasting in the buffer.

With reference to **fig.10A and 10B**, the reassembly process starts in step R3-1 with the initialization of a counter of the lost segments CSL at the reset value. Successive steps R3-2 to R3-6 constitute a cycle for reading the overhead byte OH1 of each 34-byte demapped segment SEG stored in the FIFO, with the purpose to find the first segment of a new frame. Those segments that don't match the condition of first segment are discarded. Once the first segment is acquired, another cycle (steps R3-7 - R3-12) is started to read all middle segments delivered by FIFO in increasing numeral order. For each segment read in correct sequence the two overhead bytes OH1 and OH2 are stripped out. The bare segments are stored in sequence into another buffer SEG2. When the presence of the last segment is pointed out by the interrogation step R3-13 in concomitance with an out of sequence condition, all segments stored in SEG2 are discarded in step R3-14 and in step R3-15 the counter CSL of the segment lost is incremented of the actual counting value CSR. The check of the last segment at the end of a correct sequence triggers another check in step R3-16 aimed to verify if the read segment is complete. A positive answer in step R3-16 indicates a short Ethernet frame of 64 bytes only, in the successive step R3-17: the overhead bytes OH1 and OH2 are stripped, the last segment is stored in buffer SEG2, the 2-segment frame is delivered to the Ethernet MAC layer, and the process is repeated for another Ethernet frame. A negative answer in step R3-16 indicates that the last in-sequence segment is incomplete and in the successive step R3-18: the overhead bytes OH1 and OH2 are stripped, valid bytes of the last segment are stored in buffer SEG2, the complete frame is delivered to the Ethernet MAC layer, and the process is repeated for another Ethernet frame.

Although the invention has been described with particular reference to a preferred embodiment, it will be evident to those skilled in the art, that the present invention is not limited thereto, but further variations and modifications may be applied without departing from the scope of the claims.

## Claims

1. Method for transporting variable-length packet data into octet-synchronous flows, including the following steps executed by a transmission interface:
- receiving plesiochronous tributary PCM flows and synchronizing their octets with a common clock;
- receiving variable-length packet data and storing them in a buffer;
- multiplexing the tributary octets in an aggregate flow subdivided in time frames describable by a matrix of bytes with fixed numbers of rows and columns, scanned by rows and with every tributary octets mapped by columns;
**characterized in that** further includes the steps of:
- dividing the buffered packet data in segments with fixed length of bytes;
- adding up to each segment an overhead with fixed length of bytes;
- mapping every segment completed with overhead into one or more sequential rows of said matrix in such manner that all mapped segments are located inside a space between at least two columns;
- transmitting onto a transport medium the aggregate flow including said multiplexed tributary flows and segmented packet data.

2. The method of claim 1, **characterized in that** every segment completed with overhead is mapped into more than one separated tracts of said rows.

3. The method of claim 1 or 2, **characterized in that** the length in bytes of said segment completed with overhead is equal to the number of octets of bits assigned to each tributary PCM flow into the aggregate flow.

4. The method of any claim from 1 to 3, **characterized in that** a Forward Error Correction code (FEC) is added at the end of each row of said associated matrix, this code accounting for all bytes of the row independently of their contents.

5. The method of any claim from 1 to 4, **characterized in that** said aggregate flow have a global header including a field used to give indication about the type of mapping used in the associated matrix.

6. The method of claim 5, **characterized in that** said type of mapping includes length and starting column-index of each tract a segment is broken into.

7. The method of claim 5, **characterized in that** said field further includes the number of conveyed sources of the packet data.

8. The method of any claim from 1 or 7, **characterized in that** every segment mapped into the rows of said associated matrix is 34 bytes long, being subdivided in 2 bytes of overhead followed by 32 bytes of data.

9. The method of claim 8, **characterized in that** a first byte of overhead (OH1) includes a first field indicating the type of allocation of the respective segment into the originating packet, and a second field indicating the sequence number of the segment.

10. The method of claim 9, **characterized in that** said first field includes 2 bits:
- a first combination of logical values of the two bits being associated to the segment mapped by first;
- a second combination of logical values being associated to all other segments except the last;
- a third combination of logical values being associated to the segment mapped by last.

11. The method of claim 10, **characterized in that** a second byte of overhead (OH2) includes a first field indicating the number of valid bytes in the last segment.

12. The method of claim 10, **characterized in that** the second byte of overhead (OH2) includes a second field addressing the source of the segment.

13. The method of any claim from 1 to 12, **characterized in that** further includes the following steps executed by a receiving interface:
- receiving said aggregate flow including multiplexed tributary flows plus segmented packet data and demapping the included segments;
- reading in sequence the overhead of demapped segments and stripping the overhead out;
- assembling the segments without overhead into a complete packet data according to the information included in the overhead fields;
- delivering tributary flows and complete packet data at separated access point.

14. The method of claim 13, **characterized in that** include the step of controlling the correct sequence number of demapped segments and in case out of sequence is checked discarding all preceding segments assembled for that packet.

15. The method of any claim from 1 to 14, **characterized in that** each packet data is included in an Ethernet frame.

16. The method of any claim from 1 to 15, **characterized in that** said transport medium is selectable between: radio, cable, and optical fibres.
